(19) Europäisches Patentamt

European Patent Office

Office européen des brevets

(11) EP 1 411 026 A2

(12) EUROPEAN PATENT APPLICATION

(43) Date of publication:
21.04.2004 Bulletin 2004/17

(51) Int Cl.⁷: C01B 3/44, C01B 3/32,
C01B 3/56, B01J 8/28

(21) Application number: 03022477.8

(22) Date of filing: 08.10.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 15.10.2002 US 271406

(71) Applicant: The Boeing Company
Chicago, IL 60606-1596 (US)

(72) Inventor: Stewart, Albert E.
Sylmar CA 91342-6907 (US)

(74) Representative: Gahlert, Stefan, Dr.-Ing. et al
Witte, Weller & Partner,
Patentanwälte,
Postfach 105462
70047 Stuttgart (DE)

(54) **Hydrogen generation apparatus and method**

(57) An apparatus and a method are disclosed to create a substantially pure hydrogen product stream before any subsequent purification steps. The apparatus (10) provides a generally enclosed reaction vessel (12) so as to reduce any extraneous exhaust materials from escaping. In addition, the apparatus (10) includes a primary (14) and a second (16) reaction chamber which are generally held at equivalent or equal pressures while at substantially different temperatures. In addition, a reaction aid or cooperator is used to increase the production of the hydrogen product stream and to also increase the purity of the hydrogen product stream. The method includes using a two chamber apparatus (10) along with the reaction cooperator to increase the hydrogen production and purity and recycling the reaction cooperator (Fig. 1).

Figure - 1

## Description

FIELD OF THE INVENTION

The present invention relates to the production of hydrogen molecules, and particularly relates to an apparatus and method for producing a substantially pure hydrogen molecule stream requiring little downstream purification.

BACKGROUND OF THE INVENTION

Hydrogen molecules and atoms are used in many commercial and industrial applications. Generally, hydrogen may be used for upgrading petroleum feed stock to more useful products. In addition, hydrogen is used in many chemical reactions, such as reducing or synthesizing compounds. Particularly, hydrogen is used as a primary chemical reactant in the production of useful commercial products, such as cyclohexane, ammonia, and methanol. Moreover, hydrogen itself is quickly becoming a fuel of choice because it reduces green house emissions. Particularly, hydrogen can be used in fuel cell and other similar applications to produce a substantially clean source of electricity for powering industrial machines and automobiles.

Several methods are known to remove or generate hydrogen from carbonatious or hydrocarbon materials. Although many hydrocarbon sources may be used to generate hydrogen, methane or natural gas is most commonly used. The gas easily travels through various mechanisms and can be a fuel in the different reforming and generation techniques. These generation techniques, that use a hydrocarbon material, generally include high temperature shift reactions with steam, low temperature shift reaction, and pressure swing absorbers. Pressure swing absorbers also represent a purification technique. Pressure swing absorbers can generally produce a hydrogen product of about 99% pure hydrogen. Other hydrogen production systems include bi-products from various industrial processes and electrical decomposition of water.

Although the pressure swing absorbers (PSA) can be used to further purify the hydrogen stream, a hydrogen stream must first be produced. Generally, steam methane reformers (SMR) are used in large scale industrial processes to create the initial stream of hydrogen. SMRs generally produce less than 90% pure hydrogen molecules in their product streams. Along with the hydrogen streams, side products, such as carbon dioxide, methane, and other bi-products are produced, all of which pollute the hydrogen stream. Moreover, the SMRs are generally operated at high temperatures and pressures. SMRs are typically operated at a temperature of at least about 800°C (about 1470°F). To achieve such high temperatures, large amounts of supplemental heating fuel must be used to raise the temperatures of the reaction chambers. In addition, the SMRs generally require pressures in excess of 20 atmospheres. Again, an additional energy source must be used to raise the reaction chambers to such a pressure. Therefore, these systems use a large amount of energy to produce the hydrogen product stream.

Not only are the current SMRs generally fairly inefficient at producing the hydrogen streams, although they are able to produce large quantities of hydrogen, the SMRs must also be augmented by the PSAs. Because the stream of hydrogen produced by the SMRs is generally less than about 90% pure hydrogen, the PSAs assist in purifying the hydrogen stream further. The PSA is generally known in the art, but is discussed briefly herein.

Generally, in a PSA the hydrogen stream is passed over a filter or bed. Various different bed products may be used depending upon the contaminant desired to be removed at a particular step. Bed products include carbon beds or molecular sieves. Different filters absorb the different contaminant molecules. As each of the filter sections become filled or saturated with the various contaminant products, they begin to elude that particular bi-product. At this point, the stream is swung or switched to a different PSA, while the filters in the first are regenerated off-stream. During this purification process a portion of the hydrogen, which initially is introduced into the PSA, is lost. Presently, SMRs and PSA purifiers, though able to make a hydrogen stream, which is ultimately approximately 99% pure, do not meet the theoretical yields that are possible using a hydrocarbon fuel source, such as methane. Generally, the SMRs and PSAs are approximately about 75% efficient in generating hydrogen from a methane fuel source.

It is also known that catalysts may be used in a reaction chamber to help separate the bi-products, such as carbon dioxide and carbon monoxide, from the hydrogen product. These processes, however, generally use solid beds as catalyst beds, which require specific maintenance and specifications. Moreover, the method, as described in "Hydrogen From Methane In A Single - Step Process," B.balasubramanian, et al., Chemical Engineering Science, 54, 3543-3552 (1999) is impractical for large scale industrial production.

Therefore, it is desired, in light of the current and projected uses and demands for a hydrogen product, to produce a system and method to produce a substantially pure hydrogen stream while optimizing the efficiency of the apparatus and method. In particular, it is desired to produce a hydrogen stream that is substantially pure before being purified. This increases the amount of hydrogen generated per unit of fuel and decreases the energy consumption per unit of hydrogen produced. Moreover, when the initial or unpurified hydrogen stream is made more pure, less is lost in any later purification processes. Even using a PSA purification system, the amount of hydrogen lost can be reduced by reducing the size of the PSA system because the amount of contaminants in the unpurified hydrogen stream is reduced.

SUMMARY OF THE INVENTION

The present invention is directed to a system to produce hydrogen from a fuel source. Generally a hydrocarbon is an appropriate fuel source that may be reformed to produce the hydrogen product. The system includes two chambers, one where the reformation and a reaction cooperator is placed and a second where the reaction cooperator may be recycled. The reaction cooperator removes a contaminant from the reformation of the fuel in one chamber and the contaminant is removed from the reaction cooperator in the second chamber.

A first preferred embodiment of the present invention provides an apparatus for a steam reformation of a fuel to form a hydrogen product. The apparatus comprises a first reaction chamber, including a reaction cooperator, and a second reaction chamber. A transport system transfers a portion of the reaction cooperator to the second reaction chamber. A fuel supply supplies a volume of the fuel to the apparatus. The volume of fuel is reformed in the first reaction chamber. The reaction cooperator moves a product, other than the hydrogen product, from the first reaction chamber to the second reaction chamber. Also, the hydrogen product is removed from the apparatus.

A second preferred embodiment of the present invention provides a system for the steam reformation of a fuel to produce a hydrogen product stream. The system comprises a first reaction chamber in which the fuel is reformed. A separator removes a contaminant product of the reformation from the first reaction chamber. A second reaction chamber provides an area where the contaminant product is removed from the separator. A hydrogen outlet allows the removal of the hydrogen product from the system.

The present invention provides a preferred method to reform a fuel in a reaction vessel, including a first chamber and a second chamber, to produce a hydrogen product with a separator to increase the production and purity of the hydrogen product. The method comprises reforming the fuel in the first chamber with a reforming agent, wherein the hydrogen product and at least one contaminant is produced. The contaminant is reacted with the separator. The separator is then moved to the second chamber. Finally, the contaminant may be removed from the separator.

Further areas of applicability of the present invention will become apparent from the detailed description provided hereinafter. It should be understood that the detailed description and specific examples, while indicating exemplary embodiments of the invention, are intended for purposes of illustration only and are not intended to limit the scope of the invention.

BRIEF DESCRIPTION OF THE DRAWINGS

The present invention will become more fully understood from the detailed description and the accompanying drawings, wherein:

Figure 1 is a simplified schematic view of a hydrogen generation unit in accordance with a preferred embodiment of the present invention; and

Figure 2 is a simplified cross-sectional view of a hydrogen generation vessel represented in Figure 1.

DETAILED DESCRIPTION OF THE PREFERRED EMBODIMENTS

The following description of the preferred embodiment(s) is merely exemplary in nature and is in no way intended to limit the invention, its application, or uses.

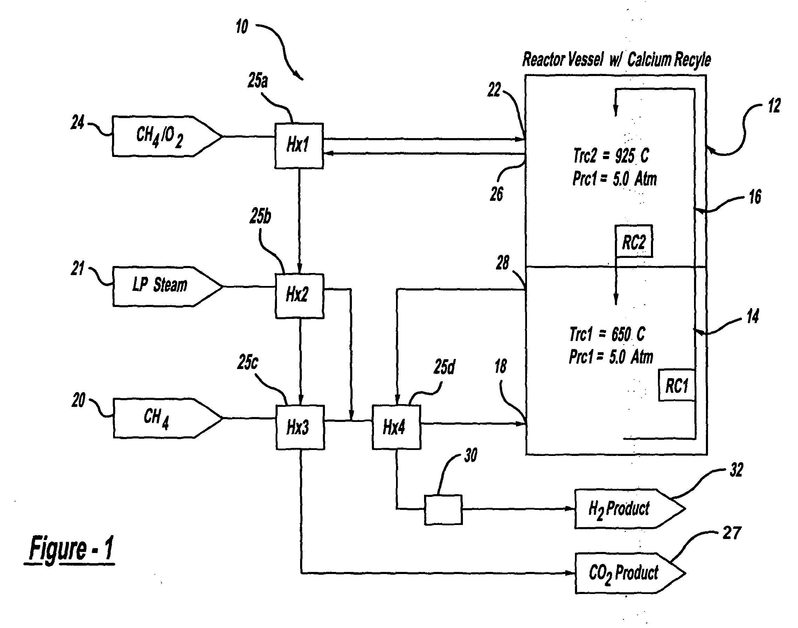

With reference to Figure 1, a simplified diagram of a hydrogen generation unit 10 in accordance with a preferred embodiment of the present invention is illustrated. The unit 10 generally includes a reaction vessel 12 having a lower or primary reaction chamber 14 and an upper or secondary reaction chamber 16. The reaction vessel 12 includes an inlet 18 to allow methane from a methane source 20 to be introduced into the lower chamber 14. The inlet 18 also provides an inlet for steam from a steam source 21. The steam reforms the methane to produce the hydrogen stream or hydrogen product discussed more fully herein. Provided in the transport lines are a plurality of heat exchangers 25a, 25b, 25c, and 25d. The heat exchangers 25a, 25b, 25c, 25d may provide required thermal energy or remove excess energy as required.

The upper chamber 16 generally includes a methane and oxygen inlet 22 that is provided to receive methane and oxygen from a methane and oxygen source 24. It will be understood, however, that an alternative fuel may be used to heat the secondary chamber 16 such as waste gas from the unit 10, or the hydrogen product. Furthermore, another oxidizer, such as atmospheric air, may be used as an oxidizer. Here methane is an exemplary heat fuel and oxygen an exemplary oxidizer.

The reaction vessel 12 also includes a carbon dioxide outlet 26. The carbon dioxide outlet 26 provides a path for removing carbon dioxide, which is a bi-product and described more further herein of the hydrogen generation process, and collecting the carbon dioxide in a carbon dioxide product container 27. In addition, a hydrogen stream outlet 28 is provided so that the hydrogen generated from the process can be removed from the reaction vessel 12. More specifically, the hydrogen stream is primarily removed from the primary reaction chamber 14, which is the lower chamber of the reaction vessel 12. Some unreacted or excess methane may also be included in the hydrogen stream, which is removed by a filter or scrubber 30. The methane filter 30 is provided in line with the methane supply 20 such that the methane removed from the product stream from the reaction vessel 12 can be provided back to the reaction vessel 12 through the methane inlet 18. The final hydrogen product can then be collected in a hydrogen container 32 and be removed. It will also be understood that the hydrogen product may be further purified if required.

The general schematic of the hydrogen generation unit 10 provides a system to generate hydrogen from a methane source in a new reaction vessel 12. Although methane is described herein, it will be understood that other fuels may be used to produce the hydrogen product. The unit 10 provides a system to produce and collect hydrogen. The intrinsic reactions are discussed briefly herein to help the reader more fully understand the present system and process. The reforming of the methane generally proceeds according to the reformation reaction indicated by the formula as follows:

$$Reforming\ Reaction:\ CH_4+H_2O \rightarrow CO+3H_2$$

This reforming reaction produces a first portion of hydrogen and carbon monoxide from the steam reformation of methane.

A second reaction is the shift reaction that produces a second portion of hydrogen by the reaction of the carbon monoxide, from the reforming reaction, with steam:

$$Shift:\ CO+H_2O\ reaction \rightarrow CO_2+H_2.$$

These are the two main reactions, that produce the hydrogen product. The hydrogen product or stream is removed through hydrogen outlet 28.

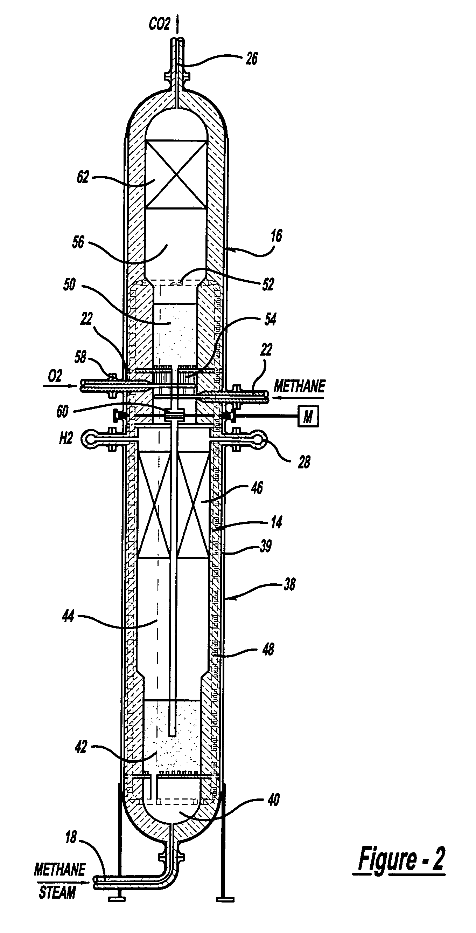

The reaction vessel 12, particularly in the primary reaction chamber 14, also includes a primary bed (Figure 2 at 42) that includes a separator or reaction cooperator. The primary bed 42 generally includes a catalyst and a calcium containing substance or constituent. Examples include calcium oxide and calcium carbonate which are placed in the primary bed 42 with a reaction catalyst. The presence of the calcium helps remove the carbon dioxide from the shift reaction. The removal, also known as a separation reaction, proceeds as follows:

$$Separation:\ CaO+CO_2 \rightarrow CaCO_3.$$

The product of the separation reaction is a solid, whereas the hydrogen product generated from the methane source is a gas. Therefore, gravity can be used to separate the solid calcium product from the gaseous hydrogen by allowing it to fall to the bottom of the primary reaction chamber 14.

This general process allows for a theoretically pure hydrogen product gas to be formed in an area above the primary bed 42. Although this may generally not be the case, the purity of the hydrogen can be in substantial excess of the current methods.

The calcium is generally mixed with a suitable catalyst to assist in the production of hydrogen product gas from the methane source. Although many suitable catalysts are known, an exemplary catalyst is 4-22 wt. % nickel on alpha alumina interspersed with the calcium.

The primary reaction chamber 14 may be operated at a temperature substantially below the generally known temperatures in a SMR. For example, the primary reaction chamber 14 may be sustained at a temperature between about 625°C and about 725°C (about 1150°F and about 1340°F). In addition, the primary reaction chamber 14 need only be kept at a pressure of between about 4 and about 6 atmospheres. The secondary reaction chamber 16 can be kept at an elevated temperature relative the temperature of the primary reaction chamber 14. Generally, the secondary reaction chamber 16 has a temperature between about 900°C and about 1000°C (about 1650°F and about 1840°F). The elevated temperature is maintained by using a small amount of heating fuel and oxidizer. Specifically, methane and oxygen may be provided from the methane and oxygen source 24 through the methane and oxygen inlet 22 into the secondary reaction chamber 16. This allows the secondary reaction chamber 16 to maintain an elevated temperature to remove the carbon dioxide off of the calcium, as described more fully herein, without requiring an elevated temperature to be maintained for the entire reaction vessel 12. Although the secondary chamber 16 is held at an elevated temperature, it is at a substantially equal pressure as the primary chamber 14. This secondary chamber is also generally between about 4 and about 6 atmospheres.

The primary bed 42 is where the initial reformation of the methane into other products, specifically following the Reformation Reaction, occurs. Moreover, the shift reaction also occurs within the primary bed 42, as will be discussed more fully herein. The primary bed 42 may be any appropriate type of bed such as, for example, a fluidized bed. A fluidized bed is generally a bed, that has solid particles that are small and sufficiently fine to resemble a fluid.

As the steam and methane move through the primary bed 42, the reformation and shift reactions occur. This produces carbon dioxide, which may then react with the reaction cooperant in the primary bed 42. This produces a separation reaction product, for example calcium carbonate when the reaction cooperator is calcium. The separation reaction product, described herein to include calcium carbonate as an example, is then moved in bulk to the secondary reaction chamber 16. Here the calcium carbonate product is elevated to the higher temperatures of the secondary reaction chamber 16. These elevated temperatures drive the carbon dioxide from the calcium carbonate product causing the reversion of the calcium carbonate to the original calcium bed substance. The carbon dioxide may then be removed as a gas from the secondary reaction chamber 16. It will be understood that other fuels and other reaction cooperators may form other separation reaction products.

The reaction vessel 12 allows a substantially closed reaction area. Simply, the single reaction vessel 12 surrounds all of the combustion and reformation processes that occur. Therefore, the system of the reaction vessel 12 is substantially sealed relative to the outside atmosphere. Therefore, a substantial reduction, or virtual elimination, of undesirable pollutants occurs, such as combustion exhaust produced by other generally known external reactors.

With reference to Figure 2, an exemplary vessel 38 for a steam methane reformer is illustrated. The vessel 38 includes the primary reaction chamber 14 and the secondary reaction chamber 16. According to the exemplary system, the vessel 38 substantially surrounds the primary reaction chamber 14 and the secondary reaction chamber 16 with a single wall or container 39. This reduces the ability of any of the interior reactants to exit into the environment surrounding the vessel 38. Thus, the system is substantially contained and enclosed. Particularly there are no combustors outside of the vessel 38 which may produce an exhaust.

Methane and steam are provided to the primary reaction chamber 14 through the methane and steam inlet port 18. The methane and steam then enters a bottom portion 40 of the primary reaction chamber 14. Initially, the methane and steam encounters the primary bed 42. The primary bed 42 includes the fluidized calcium substance and the desired catalyst. Although the primary bed 42 in one exemplary form is fluidized, it may also be bubbled or otherwise in motion. It will also be understood that the primary bed 42 may be a solid bed over which the methane and steam flows. As the methane and steam travel through the primary bed 42, all three of the above described reactions, that being the reformation, the shift, and the separation reactions, occur.

Above the primary bed 42 is a primary chamber free-board area 44. In this area gas that comes from the primary bed 42 flows freely upwards. Specifically, the gas in the free-board area is substantially hydrogen product gas. Nevertheless the gas, which is formed from the methane and steam, may include other bi-products. The gas from the free-board area then encounters a first or primary filter 46. The primary filter 46 is an initial filter to help remove bi-products from the hydrogen product stream or to remove solid contaminants that may be carried from the bed. After the primary filter 42, a purer stream of hydrogen product exits through the hydrogen ports 28. After the hydrogen exits the hydrogen ports 28, it may be collected in the appropriate hydrogen collection container (illustrated in Figure 1).

Also in the primary reaction chamber 14 is a bed moving or transport mechanism 48. The bed transport mechanism 48 moves bed material from the primary bed 42 to a secondary bed 50 in the secondary reaction chamber 16. The bed material from the primary bed 42 is moved in bulk using the bed transport mechanism 48 to a position above the secondary bed 50 such that the material may simply fall from the bed transport mechanism 48 into the secondary bed 50. It will be understood, however, that the bed transport mechanism 48 may deposit the bed material directly in the secondary bed 50. An exemplary bed transport mechanism 48 includes a lift or chain mechanism having a continuous chain system that removes a portion of the primary bed 42, carries it a distance to a position above the secondary bed 50, and drops it via gravity into the secondary bed 50 at the drop point 52.

This transported bed material includes the calcium carbonate product from the separation reaction. In the secondary bed 50 the bed material is heated to the elevated temperatures. The heat is provided by a combustion of the heat fuel and oxidizer which combust to heat the secondary bed 50. Although any appropriate fuel may be used, methane is one exemplary fuel that may be used to reduce the number of constituents required to operate the hydrogen generation unit 10.

The methane and oxygen combusts in a combustion chamber 54 to heat the secondary bed 50. As the secondary bed 50 is heated, carbon dioxide is released from the bed material and a carbon dioxide gas moves into the secondary free board area 56. The secondary bed 50 is also moving, but not necessarily fluidized. However, the secondary bed 50 may also be fluidized.

A drop or return line 58 operably connects the secondary bed 50 and the primary bed 42. The drop line 58 includes a valve, for example, a star valve 60. The valve 60 helps regulate or meter the movement of the bed material from the secondary bed 50 back into the primary bed 42. The return line 58 interconnects the secondary bed 50 and the primary bed 42 via gravity. Although a gravity return system is illustrated, an active return system may be provided. For example, a second bed transport mechanism may transport bed material from the secondary bed 50 to the primary bed 42. Material from the secondary bed 50 may drop back into the primary bed 42. This recycles the bed materials. Moreover, the catalyst and calcium constituent are not consumed in the system.

In providing the secondary bed 50 above the primary bed 42, the material from the secondary bed 50 needs only to be dropped via gravity through the drop line 58. This requires only an active handling or movement of the material from the primary bed using the transport mechanism 48. The material in the primary bed 42 is cooler than the material in the secondary bed 50. Therefore, the wear on the bed transport mechanism 48 is reduced by having it only need to contact a cooler material. It will be understood, however, that an active transport mechanism can be used to move the material in the secondary bed.

Regulating the flow of bed material with the valve 60 helps control the temperatures of the two beds. Specifically, it is desirable that the primary bed 42 be held at a temperature below that of the secondary bed 50. Therefore, a large amount of material moving from the hot secondary bed 50 to the cool primary bed 42 would upset the heat balance.

The carbon dioxide, which is in the second free board area 56, may initially be filtered in a secondary filter 62 before it is removed from the $CO_2$ removal port 26. The secondary filter 62 generally removes solid particles from the bed so that the particles do not impede the gas removal. Once removed from the $CO_2$ port, the $CO_2$ may then be collected at an appropriate chamber (illustrated in Figure 1).

It will also be understood, though not specifically illustrated, that the hydrogen product may be further purified in secondary systems. Specifically, the hydrogen product may be purified in PSAs. The PSAs may further remove any additional contaminants, such as carbon dioxide and other contaminants, that may still be present in the hydrogen stream. Generally, however, the hydrogen product stream produced by the reaction vessel 12 is at least about 93% pure hydrogen before any further purification occurs. Therefore, any further purification processes may be minimized due to the substantially pure hydrogen produced by the reaction vessel 12. Moreover, because the hydrogen stream is initially so pure, a much smaller amount is lost in other purification processes that may follow the initial hydrogen generation.

One reason for the purity of the hydrogen stream is the removal of one of the major side products from the reformation and shift reaction, that being carbon dioxide. The inclusion of the reaction cooperator, for example the calcium constituent, in the primary bed 42 helps to remove this product from the reformation and shift reactions. Not only does this produce a substantially pure hydrogen product, but it also increases the hydrogen generation from the fuel. Specifically, this is due to the Le Chatelier's Principle. Briefly, the Le Chatelier's Principle states that removing a product of a reaction will shift the equilibrium of the reaction, thereby increasing the production of the other reaction products.

Applied to the instant system, the shift reaction consumes the carbon monoxide from the reforming reaction to produce carbon dioxide and additional hydrogen gas. The separation reaction consumes carbon dioxide from the shift reaction to produce the solid calcium carbonate product. Because all of the other reactants are gas, the calcium carbonate, being a solid, is substantially removed. Therefore, substantially all of the hydrogen producing reactions, those being the reforming and shift reactions, include a further reaction that removes an undesirable or contaminant product, either carbon monoxide or carbon dioxide, which increases the rate of the production of hydrogen product gas.

The reaction vessel 12 thus allows for an easy removal of the carbon dioxide from the bed material where the separation reaction occurs. The bed material is not consumed, but merely recycled so that it may again perform the separation reaction to remove additional carbon dioxide from the primary reaction chamber 14. Therefore, the production of a substantially pure hydrogen stream is increased.

Placing the secondary reaction bed 50 above the primary bed 42 also allows for a more efficient and complete use of all thermal energy provided to the unit 10. Specifically, the secondary bed 50 must be heated to perform the removal or $CO_2$ desorption reactions of the steam reformer system in the unit 10. Therefore, the material in the secondary reaction bed 50 is heated to an elevated temperature. By utilizing the drop line 58, the heated material from the secondary reaction bed 50 can be used to offset the slightly endothermic reaction that occurs in the primary bed 42. Specifically, as a $CO_2$ desorbs from the primary bed 42, energy is absorbed into the bed material therefore cooling the primary bed 42. Moreover, as hydrogen is produced in the primary bed 42, energy is absorbed into the bed material that results in cooling of the primary bed 42. By providing the hot material from the secondary reaction bed 50, this slight endothermic reaction is offset so that the primary bed 42 is also kept at a constant preferred temperature. Therefore, the unit 10 substantially reduces any thermal loss by allowing the material from the secondary reaction bed 50 to be dropped into the primary bed 42 and the thermal energy remaining in the material to be used in the primary bed 42.

The description of the invention is merely exemplary in nature and, thus, variations that do not depart from the gist of the invention are intended to be within the scope of the invention. Such variations are not to be regarded as a departure from the spirit and scope of the invention.

**Claims**

1. An apparatus for the steam reformation of a fuel to produce a hydrogen product stream, the appartus (10) comprising:

   a first reaction chamber (14) in which the fuel is reformed;
   a separator to remove a contaminant product of the reformation;
   a second reaction chamber (16) wherein the contaminant product is removed from said separator; and
   a hydrogen outlet (28) to allow the removal of the hydrogen product from the apparatus.

2. The apparatus of claim 1, wherein said first reaction chamber (14) includes said separator;

a transport mechanism is provided that is adapted to transfer a portion of said separator to said second reaction chamber (16);

a fuel supply is provided to supply a volume of the fuel to the apparatus (10);

wherein the volume of fuel is reformed in said first reaction chamber (14);

wherein said separator moves a product other than the hydrogen product from said first reaction chamber (14) to said second reaction chamber (16); and

wherein the hydrogen product is removed from the apparatus (10).

3. The apparatus of claim 1 or 2, further comprising:

a reaction vessel (12), wherein said first reaction chamber (14) and said second reaction chamber (16) are within said reaction vessel (12.)

4. The apparatus of any of claims 1 to 3, wherein said reaction vessel (12) substantially encloses the apparatus (10) such that the apparatus is substantially sealed, in particular to substantially entrap an exhaust from said reaction vessel (12) or to substantially eliminate the thermal energy loss of the steam reformation reaction.

5. The apparatus of any of claims 1 to 4, wherein said separator includes a constituent, in particular calcium, to hold the product from the reformation production.

6. The apparatus of any of claims 1 to 5, wherein the product is removed in said first reaction chamber (14) at substantially the same time as the reformation production.

7. The apparatus of any of claims 1 to 6, further comprising:

a reformation reaction bed (42) in said first reaction chamber (14);
a removal reaction bed (50) in said second reaction chamber (16);

wherein said separator is included in said reformation reaction bed (42); and
wherein said reaction operator is transported to said removal reaction bed (50).

8. The apparatus of claim 7, wherein said removal reaction bed (50) is positioned above said reformation reaction bed (42).

9. The apparatus of any of claims 1 to 8, wherein said first reaction chamber (14) is maintained at a temperature between about 625°C and about 725°C, and wherein said second reaction chamber (16) is maintained at a temperature between about 900°C and about 1000°C.

10. The apparatus of any of claims 1 to 9, wherein said first reaction chamber (14) and the second reaction chamber (16) are maintained at a substantially equivalent pressure.

11. The apparatus of any of claims 1 to 10, wherein said separator includes a constituent to remove the contaminant of the hydrogen product steam.

12. The apparatus of any of claims 1 to 11, wherein the contaminant is removed in said reaction chamber (16) substantially while the reformation occurs.

13. The system of any of claims 1 to 12, further comprising a transport mechanism (48) to move said separator from said first reaction chamber (14) to said second reaction chamber (16).

14. The apparatus of claim 13, wherein said transport mechanism (48) includes:

a track;
a transport device, in particular a locomotive device, that moves in said track; and
a motor to provide locomotion to said transport device.

15. The apparatus of claim 13 or 14, further comprising:

a return mechanism, wherein said separator returns to said first reaction chamber (14) after being transported to said second reaction chamber (16).

16. The apparatus of any of claims 1 to 15, further comprising a fuel source (24) to provide the fuel to the system, wherein the fuel includes a hydrocarbon.

17. The apparatus of claims 7 to 16, wherein said reformation reaction bed (42) is f luidized.

18. A method to reform a fuel in a reaction vessel (12), including a first chamber (14) and a second chamber (16), to produce a hydrogen product with a separator to increase the production an purity of the hydrogen product, the method comprising:

reforming the fuel in the first chamber (14) with a reforming agent, wherein the hydrogen product and at least one contaminant is produced;
reacting the contaminant with the separator;
moving the separator to the second chamber (16); and
removing the contaminant from the separator.

**19.** The method of claim 18, wherein the reforming agent includes water and reforming the fuel includes reacting the fuel with water to produce at least the hydrogen product.

**20.** The method of claim 19, wherein the water is in its gaseous form when reacted with the fuel.

**21.** The method of claim 19 or 20, further comprising:

maintaining the temperature of the first chamber (14) between about 625°C and about 725°C.

**22.** The method of any of claims 18 to 22, wherein reacting the contaminant with the separator includes:

providing a calcium constituent; and
reacting the contaminant with the calcium constituent to remove the contaminant from the hydrogen product.

**23.** The method of any of claims 18 to 22, wherein moving the separator includes:

providing a transport system (48);
providing a reaction bed (42) in the first chamber (14);
providing a removal bed (50) in the second chamber (16); and
moving a portion of the separator from the reaction bed (42) to the removal bed (50).

**24.** The method of any of claims 18 to 23, wherein removing the contaminant includes:

heating the separator to a temperature sufficient to drive the contaminant from the separator.

**25.** The method of any of claims 18 to 24, further comprising returning the separator from the second chamber (16) to the first chamber (14).

**26.** The method of any of claims 18 to 25, wherein returning the separator to the first chamber (14) substantially eliminates thermal loss of reforming said fuel.

Figure - 1

EP 1 411 026 A2

Figure - 2